# EUROPEAN PATENT SPECIFICATION

(11) **EP 1 483 163 B1**
(45) Date of publication and mention of the grant of the patent: **27.07.2005**
(21) Application number: 03706339.3
(22) Date of filing: 28.02.2003
(51) Int. Cl.: B65D 43/02, B65D 43/26, B65D 55/02

(54) **A CONTAINER; A PACKAGING MADE THERE FROM; AND A MOULDING TOOL AND A METHOD OF MANUFACTURING THE CONTAINER**
BEHÄLTER, DARAUS HERGESTELLTE VERPACKUNG UND FORMWERKZEUG UND VERFAHREN ZUR HERSTELLUNG DES BEHÄLTERS
CONTENANT, EMBALLAGE REALISE A PARTIR DE CE CONTENANT, INSTRUMENT DE MOULAGE ET PROCEDE POUR LA FABRICATION DU CONTENANT

(30) Priority: 08.03.2002 DK 200200359
(43) Date of publication of application: 08.12.2004
(73) Proprietor: Superfos A/S, 2950 Vedbaek (DK)
(72) Inventor: NIELSEN, Kjeld, DK-4470 Sveb lle (DK)
(74) Representative: Sundien, Thomas
(86) International application number: PCT/DK2003/000130
(87) International publication number: WO 2003/076287

(56) References cited:
- EP-A1- 0 352 962
- EP-A1- 0 443 750
- EP-A1- 0 565 967
- EP-A1- 1 052 183
- EP-A1- 1 122 184
- DATABASE WPI Week 199409, Derwent Publications Ltd., London, GB; Class A32, AN 1994-071388, XP002971265 & JP 3 270 771 B2 (SANKO KK) 02 April 2002

## Description

The present invention relates to a container of plastics comprising a bottom; an annular side wall with an annular engagement area arranged opposite the bottom and configured for being able to cooperate with a lid; a skirt arranged on the side wall along the engagement area; a flap configured for being turned manually around a turning connection which is covered by the lid and which is arranged in proximity of said engagement area, from a first position in which the flap extends in parallel with or approximately in parallel with the side wall and upwards to a second position in which the flap is able to lift the lid out of engagement with at least a part of the engagement area.

EP 1,122,184, EP 1,052,183 and EP 565,967, teach containers of this kind. In EP 1,122,184 as well as EP 565,967 the flap is moulded integrally with the annular skirt. The connection between the vertical sides of the flap and the skirt is tender and quite easily broken, whereby it is possible to ascertain whether the flap has been turned upwards and thus whether the lid was once removed from the container. By the solution taught in EP 1,052,183 a strip that extends before the flap must be broken before the flap can be turned upwards. It is hence a common feature that, prior to purchasing a packaging consisting of the container with contents and lid fitted thereon, the consumer is able to verify that nobody has previously removed the lid and gained access to the contents of the packaging.

Containers of the type in question are conventionally manufactured by means of an injection moulding tool, into which - from a source of a plastics material - plastics is injected and thus the container appears with a uniform appearance corresponding to the selected plastics material.

It is a problem with the prior art containers that the consumer tends to overlook the flap and thus to try to remove the lid in an unintentional manner by means of a sharp tool that he/she attempts to introduce underneath the edge of the lid. Such behaviour will, in all events, involve that the consumer feels uncomfortable using the container and thus possibly avoids buying the product in question at a later point in time.

The invention attempts to remedy this problem by providing an improved container of the above-mentioned kind with a more clear indication of how the container should open as featured in the characterising part of claim 1. By the container defined in claim 2, the desired clarity can be obtained in a manner that is convenient from a manufacturing point of view. Additionally, the invention provides an injection tool and a method of manufacturing the improved container by use of the injection moulding tool.

Advantageous embodiments are taught in the further dependent claims. Thus the invention lends itself for use both when the flap along the sides is moulded integrally with the skirt as described in EP 1,122,184 and EP 565,967 and when the only connection of the flap with the remaining part of the container is embodied by the turning connection.

The invention also relates to a packaging comprising a container of the type in question and a lid.

The invention will now be explained in further detail with reference to an exemplary embodiment.
Figure 1 shows a moulded plastics container, seen in an inclined view from above;
Figure 2 is a schematic sectional view of an injection moulding tool for manufacturing a container according to the invention.

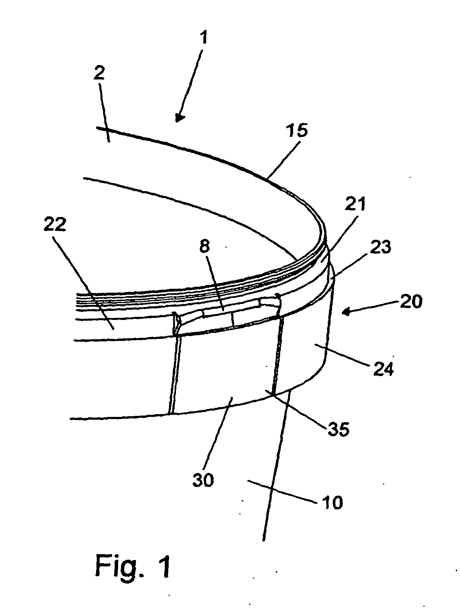

In Figure 1, reference numeral 1 generally designates a section of a moulded plastics container, seen in an inclined view from above. The container 1 has an annular side wall 10 that extends from a not shown bottom of the container and up towards the mouthing 2 of the container. Preferably, the side wall 10 follows the contour of the frustum of a cone and an engagement area 15 for a not shown lid is arranged near the mouthing 2 by the free edge of the side wall 10. The engagement area 15 is configured in a conventional manner for being able to snaplockingly engage with a complementarily configured engagement area of a not shown lid, and the engagement area can be configured and arranged as shown in EP 1,122,184, EP 1,052,183 or EP 565,967.

Round along the side wall 10 there is, on its outside in the area by the mouthing 2, arranged a skirt 20 for stiffening the container 1. The skirt 20 comprises annular wall areas 21, 22, 23 and 24 that are arranged in extension of each other, the wall areas 21, 23 extending in a direction from the side wall 10. A wall section 24, most remote from the side wall 10, thus extends round along the side wall 10 at a distance there from. For carrying the container 1 the wall area 24 may in a conventional manner comprise not shown mounting openings for a handle.

A tumable flap 30, the object of which will be explained in further detail below, is also arranged in proximity of the mouthing 2. Preferably, the flap 30 is offset by 90° relative to the mounting openings for the handle. A turning connection 8 that may be configured as a film hinge extending along the flap 30 connects the flap 30 to the remaining container 1 and allows a relatively unimpeded turning of the flap 30 in a direction upwards away from the sidewall 10.

More specifically the flap 30 can be received in a recess in the skirt that is formed by a recessed portion of the wall area 24, or the flap 30 can be received in an interruption of the skirt 20, whereby the front side 35 of the flap 30 is aligned with the surface of the wall area 24. The wall area 24 and the front 35 of the flap 30 thus combine to form an even annular surface without protruding areas that makes stacking of a number of the containers 1 difficult.

The flap 30 can be secured in the shown position in various ways, eg as described in EP 1,122,184, EP 1,052,183 or EP 565,967.

In the shown state of the flap 30 the container can be supplied to an organisation or a business that fills the container 1 with a charge and subsequently arranges a lid in engagement with the engagement area 15. Hereby the lid will extend down across the wall portions 21, 22 of the skirt 20 and down across a part of the upper area of the flap 30, immediately below the turning connection 8. By manually turning the flap 30 upwards by means of the turning connection 8, it will subsequently be possible to release the lid from at least a part of the engagement area 15 immediately above the flap 30, said upper area of the flap 30 pressing the adjoining area of the lid outwards and upwards. Hereby the lid is more easily removed manually.

Following application of the lid, the container 1 is ready for further distribution to a sales outlet. Hereby the lock that secures the flap 30 in the shown position will constitute a guarantee that the lid was not previously removed. Previous attempts to remove the lid by operation of the flap 30 can thus be ascertained by the locking of the flap 30 being broken.

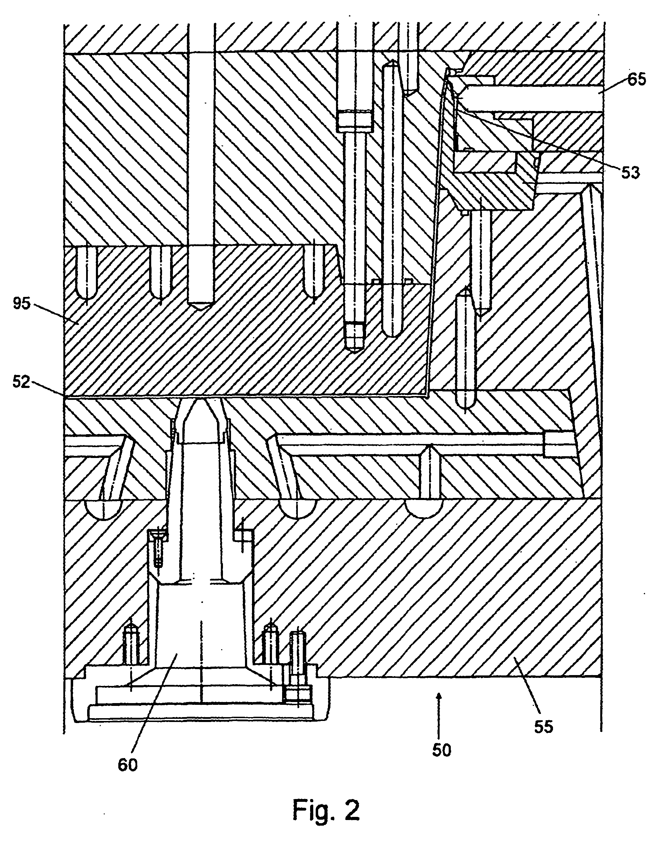

Figure 2 shows a sectional view of an injection moulding tool 50 according to the invention which is suitable for manufacturing a container 1 as shown in Figure 1. As shown, the injection moulding tool 50 comprises a first mould part 55 that can be moved along an axis corresponding to the vertical axis of the container 1. The injection moulding tool 50 also comprises a second mould part 95 and the two mould parts 55, 95 delimit, in a closed position of the tool, a mould cavity 52 for forming the side wall 10, bottom, skirt 20 and the flap 30 of the container 1. As shown the tool according to the invention comprises two supply conduits for plastics material, wherein the one conduit 60 debouches in the area where the bottom of the container 1 is formed, whereas the second conduit 65 debouches in the area 53 where the flap 30 is formed. Each conduit 60, 65 is coupled to a respective source of plastics material, the plastics materials being of different colours, thereby yielding a finished product with a flap 30 having one colour, while the remaining part of the container 1 has a another colour. The area 53 of the mould cavity 52 in which the flap 30 is formed being in communication with the remainder of the mould cavity, the injection of the plastics material must be controlled such that the fronts of the plastics material injected through the two conduits 60, 65 meet in an area near the flap 30 so as to impart to the flap 30 a readily identifiable appearance on the finished container 1.

## Claims

1. A container (1) of plastics and comprising:
- a bottom;
- an annular sidewall (10) with an annular engagement area (15) arranged opposite the bottom, and configured for being able to cooperate with a lid;
- a skirt (20) arranged on the sidewall (10) along the engagement area (15);
- a flap (30) configured for being manually turnable around a turning connection (8) which is covered by the lid and which is arranged in proximity of said engagement area (15), from a first position, in which the flap (30) extends in parallel with or approximately in parallel with the side wall (10), and upwards to a second position in which the flap (30) is able to lift the lid out of engagement with at least a part of the engagement area (15),
**characterised in that** the flap (30) has a different colour than that of the skirt (20).

2. A container according to claim 1, **characterised in that** the flap (30) is manufactured from a plastics material having different colour than that of the skirt (20).

3. A container according to one of the preceding claims, **characterised in** having a lock that is destroyed when the flap (30) is moved from the first position to the second position and that secures the flap (30) in the first position.

4. A container according to the preceding claim, **characterised in that** the lock is a snap-lock configured for being activated when the flap (30) is moved to the first position.

5. A container according to claim 1 or 2, **characterised in that** the lock is configured as an integrally moulded connection between the flap (30) and the skirt (20).

6. A container according to claim 1 or 2, **characterised in that** the lock is configured as an integrally moulded connection between the flap (30) and the sidewall (10).

7. A packaging comprising a container (1) according to any one of the preceding claims and a lid being in engagement with said engagement area (15) and extending down along the front side of the flap (30).

8. An injection moulding tool (50) for manufacturing a container according to any one of the preceding claims 2-6, said injection moulding tool (50) defining a mould cavity (52) for forming the container (1), **characterised in that** the injection moulding tool has a first (60) and a second (65) supply conduit for plastics material; that the one supply conduit (65) debouches in the area (53) of the mould cavity (52) in which the flap (30) is formed; and that the first (60) and the second (65) supply conduit are connected to a source for a respective plastics material.

9. A method of manufacturing a container by means of the injection moulding tool according to claim 8, **characterised in that** the flow of plastics material from the respective sources is regulated such that the fronts of the plastics materials meet in proximity of the area (53) of the mould cavity (52) in which the flap (30) is formed.

## Patentansprüche

1. Ein Behälter (1) aus Kunststoff und mit:
- einem Boden;
- einer ringförmigen Seitenwand (10) mit einem ringförmigen Eingriffsbereich (15), der dem Boden gegenüber angeordnet und zum Zusammenwirken mit einem Deckel gestaltet ist;
- einer Schürze (20), die an der Seitenwand (10) entlang dem Eingriffsbereich (15) angeordnet ist;
- einer Klappe (30), die gestaltet ist, um manuell um eine Drehverbindung (8), die von dem Deckel abgedeckt ist und die in der Nähe des Eingriffsbereichs (15) angeordnet ist, von einer ersten Position, in der sich die Klappe (30) parallel zu oder in etwa parallel zu der Seitenwand (10) erstreckt, aufwärts in eine zweite Position gedreht zu werden, in der die Klappe (30) den Deckel aus dem Eingriff mit mindestens einem Teil des Eingriffsbereichs (15) heben kann,
**dadurch gekennzeichnet, dass** die Klappe (30) eine andere Farbe hat als die Schürze (20).

2. Ein Behälter nach Anspruch 1, **dadurch gekennzeichnet, dass** die Klappe (30) aus einem Kunststoffmaterial gefertigt ist, das eine andere Farbe hat als das der Schürze (20).

3. Ein Behälter nach einem der vorhergehenden Ansprüche, **gekennzeichnet durch** einen Verschluss, der zerstört wird, wenn die Klappe (30) von der ersten Position zu der zweiten Position bewegt wird, und der die Klappe (30) in der ersten Position sichert.

4. Ein Behälter nach dem vorhergehenden Anspruch, **dadurch gekennzeichnet, dass** der Verschluss ein Schnappverschluss ist, der so gestaltet ist, dass er betätigt wird, wenn die Klappe (30) in die erste Position bewegt wird.

5. Ein Behälter nach Anspruch 1 oder 2, **dadurch gekennzeichnet, dass** der Verschluss als eine einstückig geformte Verbindung zwischen der Klappe (30) und der Schürze (20) gestaltet ist.

6. Ein Behälter nach Anspruch 1 oder 2, **dadurch gekennzeichnet, dass** der Verschluss als eine einstückig geformte Verbindung zwischen der Klappe (30) und der Seitenwand (10) gestaltet ist.

7. Eine Verpackung mit einem Behälter (1) nach irgendeinem der vorhergehenden Ansprüche und einem Deckel, der mit dem Eingriffsbereich (15) in Eingriff ist und sich abwärts entlang der Vorderseite der Klappe (30) erstreckt.

8. Ein Spritzgießwerkzeug (50) für die Herstellung eines Behälters nach irgendeinem der vorhergehenden Ansprüche 2 bis 6, wobei das Spritzgießwerkzeug (50) ein Formnest (52) zum Formen des Behälters (1) hat, **dadurch gekennzeichnet, dass** das Spritzgießwerkzeug (50) einen ersten (60) und einen zweiten (65) Zuführkanal für Kunststoffmaterial hat; dass der eine Zuführkanal (65) in den Bereich (53) des Formnests (52) mündet, in dem die Klappe (30) geformt wird; und dass der erste (60) und der zweite (65) Zuführkanal mit einer Quelle für ein entsprechendes Kunststoffmaterial verbunden sind.

9. Ein Verfahren für die Herstellung eines Behälters mithilfe des Spritzgießwerkzeugs nach Anspruch 8, **dadurch gekennzeichnet, dass** die Strömung des Kunststoffmaterials aus den entsprechenden Quellen eingestellt wird, derart, dass die Fronten der Kunststoffmaterialien in der Nähe des Bereichs (53) des Formnests (52) aufeinandertreffen, in dem die Klappe (30) geformt wird.

## Revendications

1. Un contenant (1) en matière plastique et comprenant:
- un fond;
- une paroi latérale annulaire (10) présentant une zone d'engagement annulaire (15) disposée à l'opposé du fond et configurée pour pouvoir coopérer avec un couvercle;
- une jupe (20) disposée sur la paroi latérale (10) le long de la zone d'engagement (15);
- un volet (30) configuré pour pouvoir être tourné à la main, autour d'une liaison tournante (8) qui est recouverte par le volet et qui est disposée à proximité de ladite zone d'engagement (15), depuis une première position, dans laquelle le volet (30) s'étend parallèlement ou de manière approximativement parallèle au côté latéral (10), et vers le haut jusqu'à une seconde position dans laquelle le volet (30) est susceptible de lever le couvercle hors d'engagement avec au moins une partie de la zone d'engagement (15),
**caractérisé en ce que** le volet (30) présente une couleur différente de celle de la jupe (20).

2. Un contenant selon la revendication 1, **caractérisé en ce que** le volet (30) est fabriqué à partir d'une matière plastique présentant une couleur différente de celle de la jupe (20).

3. Un contenant selon l'une des revendications précédentes, **caractérisé en ce qu'**il présente un organe de blocage qui est détruit lorsque le volet (30) est déplacé de la première position à la seconde position et qui fixe le volet (30) dans la première position.

4. Un contenant selon la revendication précédente, **caractérisé en ce que** l'organe de blocage est un organe de blocage à encliquetage configuré pour être rendu actif lorsque le volet (30) est déplacé vers la première position.

5. Un contenant selon la revendication 1 ou 2, **caractérisé en ce que** l'organe de blocage est configuré sous la forme dune liaison moulée entre le volet (30) et la jupe (20) pour en faire partie intégrante.

6. Un contenant selon la revendication 1 ou 2, **caractérisé en ce que** l'organe de blocage est configuré sous la forme d'une liaison moulée entre le volet (30) et la paroi latérale (10) pour en faire partie intégrante.

7. Un emballage comprenant un contenant (10) selon l'une quelconque des revendications précédentes, et un couvercle qui est en engagement avec ladite zone d'engagement (15) et s'étend vers le bas le long du côté antérieur du volet (30).

8. Un outil de moulage par injection (50) pour fabriquer un contenant selon l'une quelconque des revendications 2-6 précédentes, ledit outil de moulage par injection (50) définissant une cavité de moulage (52) pour former le contenant (1), **caractérisé en ce que** l'outil de moulage par injection comprend un premier (60) et un second (65) conduit d'amenée pour une matière plastique; **en ce que** un conduit d'amenée (65) débouche dans la zone (53) de la cavité de moulage (52) dans laquelle est formé le volet (30); et **en ce que** le premier (60) et le second (65) conduit d'amenée sont reliés à une source pour une matière plastique respective.

9. Un procédé de fabrication d'un contenant au moyen de l'outil de moulage par injection selon la revendication 8, **caractérisé en ce que** l'écoulement de la matière plastique issue des sources respectives est régulée de telle manière que les devants des matières plastiques se rencontrent à proximité de la zone (53) de la cavité de moulage (52) dans laquelle est formé le volet (30).
